# EUROPEAN PATENT APPLICATION

(11) **EP 2 280 355 A2**
(43) Date of publication of application: **02.02.2011**
(21) Application number: 10007936.7
(22) Date of filing: 29.07.2010
(51) Int. Cl.: G06F 17/30

(54) **Methods and apparatus to collect publicity available metadata to determine media creation product usage**

(30) Priority: 29.07.2009 US 511698
(71) Applicant: The Nielsen Company (US), LLC, Schaumburg, IL 60173 (US)
(72) Inventor: Besehanic, Jan, Tampa FL 33606 (US); Wright, David Howell, Safety Harbor FL 34695 (US)
(74) Representative: Samson & Partner

(57) **Abstract**

Methods and apparatus to collect publicly available metadata to determine media creation product usage are disclosed. Some example methods include collecting (708) metadata from a plurality of digital media files, identifying (712) product types used to generate the digital media files based on the metadata, determining (714) which of the identified product types is used to generate a largest number of the digital media files, and generating (716) a report identifying the product types used to generate the largest number of the digital media files.

## Description

### FIELD OF THE DISCLOSURE

This disclosure relates generally to media creation product usage measurement and, more particularly, to methods and apparatus to collect publicly available metadata to determine media creation product usage.

### BACKGROUND

Product sales have traditionally been measured by collecting sales data from points of sale, by tracking demographics of the purchasers of a product at the points of sale, by tracking a panel of consumers, and/or by using surveys.

Using digital media sharing web sites, users can share digital media with other World Wide Web users. For example, photo sharing web sites provide users with a limited or unlimited storage space to store digital photos. The photos may be made accessible to the public at large or to a subset of web site users based on the photo owner's preference. Other digital media sharing sites allow users to post audio files, video files, or other digital media to be publicly accessible.

### SUMMARY OF THE INVENTION

Methods, apparatus, and articles of manufacture to collect publicly available metadata to determine media creation product usage are disclosed as defined in the appended claims. An example method includes collecting metadata from a plurality of digital media files, identifying product types used to generate the digital media files based on the metadata, determining which of the identified product types is used to generate a largest number of the digital media files, and generating a report identifying the product types used to generate the largest number of the digital media files.

An example apparatus includes a metadata collector to collect metadata from a plurality of digital media files, a product identifier to identify product types used to generate the digital media files based on the metadata, an aggregator to determine a first product type used to generate a largest number of the digital media files, and a report generator to generate a report identifying the first product type.

An example article of manufacture includes machine readable instructions which, when executed by a computer, cause the computer to collect metadata from a plurality of digital media files, identify product types used to generate the digital media files based on the metadata, determine which of the identified product types is used to generate a largest number of the digital media files, and generate a report identifying the product type used to generate the largest number of the digital media files.

### BRIEF DESCRIPTION OF THE DRAWINGS

FIG. 1 is a block diagram of an example system to determine media creation product usage based on publicly available metadata in digital media files.

FIG. 2 is a more detailed block diagram of the example digital media crawler of FIG. 1.

FIG. 3 is an illustration of an example web page that may be crawled to retrieve metadata from digital media files.

FIG. 4 is an illustration of example metadata retrieved from a digital image file.

FIG. 5 is an illustration of example metadata retrieved from a digital audio file.

FIG. 6 is another illustration of example metadata retrieved from the digital audio file of FIG. 4.

FIG. 7 is a flowchart representative of example machine readable instructions which may be executed to determine equipment usage based on publicly available metadata in digital media files.

FIG. 8 is a table illustrating an example report generated by the digital media crawler of FIG. 2.

FIG. 9 is a table illustrating another example report generated by the digital media crawler of FIG. 2.

FIG. 10 is a diagram of an example processor system that may be used to execute the example process of FIG. 7 to implement the digital media crawler of FIG. 2.

### DETAILED DESCRIPTION

Although the example systems described herein include, among other components, software executed on hardware, such description is merely illustrative and should not be considered as limiting. For example, it is contemplated that any or all of the disclosed hardware and/or software components could be embodied exclusively in dedicated hardware, exclusively in software, exclusively in firmware or in some combination of hardware, firmware, and/or software.

Example methods, apparatus, and articles of manufacture described herein may be employed to determine media creation product usage by examining publicly available metadata present in digital media files. The usage of products such as digital cameras, digital video cameras, photo editing software, etc. (referred to in the following as "media creation products") can be difficult to track. As a result, manufacturers may have difficulty determining appropriate places in which to display targeted advertising to consumers more likely to purchase products.

Photographs, music, videos, and/or other forms of digital media are posted on many Internet web sites. Such digital media often includes metadata such as quality information and/or product identification information that identifies the hardware and/or software used to generate the media file (e.g., camera type, brand, software name, version, etc.). The example methods, apparatus, and articles of manufacture described below collect the metadata (e.g., data about data) from the digital media and use the collected metadata to, for example, develop reports about the media creation products used to create the metadata. The example digital media may be downloaded before the metadata is extracted or, alternatively, the metadata may be downloaded without downloading the associated media content.

In some examples, after collecting the metadata from multiple digital media files, the methods, apparatus, and articles of manufacture then identify the product type(s) used to generate the digital media files either in general or at specific network locations (e.g., web site(s)). In some examples, targeted advertising is generated corresponding to the product type(s) that are most popular and/or most often used either in general or at specific network locations (e.g., web site(s)). The targeted advertising may be displayed to a user viewing a web site which may or may not correspond to or include digital media files generated by an identified media creation product.

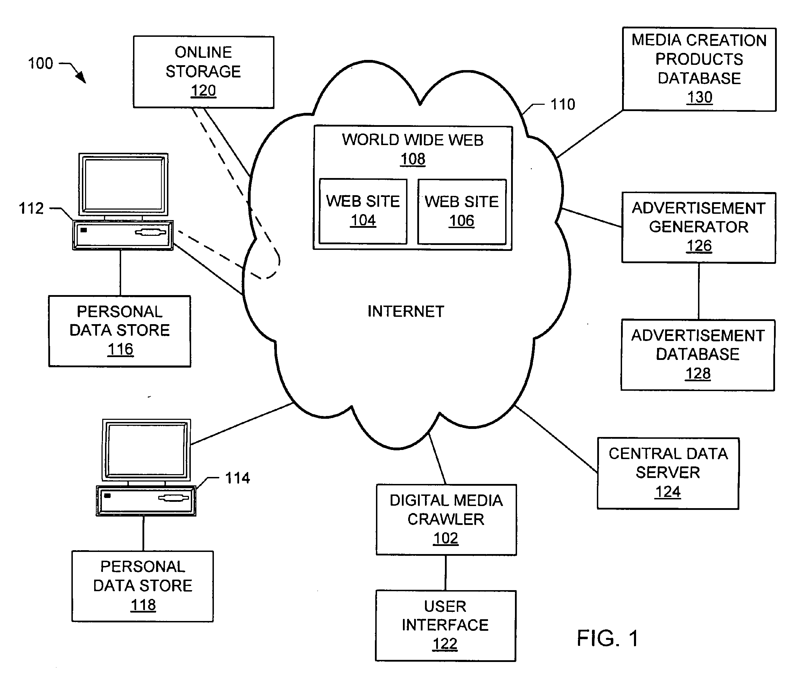

FIG. 1 is a block diagram of an example system 100 to determine media creation product usage based on metadata in publicly available digital media files. The example system 100 includes a digital media crawler 102 to communicate with web sites 104 and 106 within the World Wide Web 108 via a network such as the Internet 110. Additionally or alternatively, the digital media crawler 102 communicates with one or more user computers 112 and 114. The user computers 112 and 114 may belong to, for example, panelists selected for participation in a product use panel. The panelists may be offered discounts on products or services in exchange for access to, among other things, information regarding the panelists' product usage.

The user computers 112 and 114 typically include one or more respective personal data stores 116 and 118. The personal data stores 116 and 118 may include physical storage and/or online personal storage 120. The online personal storage 120 may be communicatively coupled to the example user computer 112 via the Internet 110. However, the online personal storage 120 may be accessed from any location from which the Internet 110 may be accessed. Therefore, the example digital media crawler 102 may access the online personal storage 120 without accessing the user computer 112.

The digital media crawler 102 identifies digital media files from any of the web sites 104 and 106, the personal data stores 116 and 118, the online storage 120, and/or any other network location. The digital media files may include digital images (e.g., digital photographs, slideshows, Joint Photographic Experts Group (JPEG) (.jpg) files), digital audio (e.g., waveform audio format (.WAV) files, Moving Picture Experts Group (MPEG)-1 Audio Layer 3 (.mp3) files, Advanced Audio Encoding (.aac), Windows Media Audio (.wma), streaming audio files, etc.), and/or digital video (e.g., Flash Video (.flv), Windows Media Video (.wmv), MPEG-4 (.mp4)). Many lossless and lossy compression formats and file formats exist for digital media files. Any or all of these compression formats and/or file formats may be identified by the digital media crawler 102 as digital media files that potentially contain metadata.

From the identified digital media files, the digital media crawler 102 collects publicly available metadata, such as the make and/or model of the digital camera that created the digital images and/or the creation and/or editing software for audio and/or video files. The metadata may be collected without the media content files themselves to protect the privacy of the media file users. When collected without the media content files, the metadata is tagged by the crawler to identify the location at which the metadata are collected, the date of collection, and/or a media file name to avoid duplicate counting of the same media file. The collected metadata is used to identify one or more media creation products (e.g., devices, equipment, and/or software packages) used to generate the digital media files. After identifying the media creation products, the example digital media crawler 102 aggregates the data to count the instances of media files created by each identified media creation product. The aggregated data is used to determine the most popular and/or most used of the identified media creation products. This determination can be made for media files contained on the Internet 110 in general, on a web site 104 or 106, a personal data store 116 or 118, and/or an online storage 120.

The scope of the determination is based on the scope of data collected. For example, to make a determination on the types of cameras used to create media files for a specific web site, only metadata from that web site need be collected. For broader determinations (e.g., the types of cameras used among multiple photo sharing web sites), a wider amount of metadata must be collected. However, by applying statistical methods, reliable conclusions can be extrapolated from samples of metadata collected from a set of media files that is smaller than all of the media files available at the locations of interest. Nevertheless, errors (e.g., sampling errors) can be reduced by collecting and processing most or even all metadata available at the network locations of interest (e.g., all metadata available at the web site 104).

Broad determinations may be used to determine media creation product usage and/or ownership among multiple web sites of the same or different types. For example, the digital media crawler 102 may determine digital camera usage among all known photo sharing sites, among the three, five, or ten (or other number) of the most popular photo sharing sites, and/or among the entire World Wide Web 108. Information to select locations for targeted advertising may be generated based on the broad determinations and provided to media creation product manufacturers.

The collected metadata can be combined with the date of collection information from the tagging information to develop other useful information. For example, if the crawler 102 visits a web site frequently (e.g., once a day), the date of collection information will be indicative of the date of posting. This information can be used to develop a report concerning the speed of introduction and/or the marketplace acceptance/usage of new cameras, media creation software, etc.

In other examples, the collected metadata may be used to identify the popularity of cameras, media creation software, etc.. For instance, the most popular media creation product(s) may be determined, for example, by the number of different users using the product(s) to create publicly accessible media files. Data about the most popular media creation product(s) may show the manufacturer(s) of those product(s) what type of web sites are visited most often by the users of the manufacturer's product(s). The most-often visited web sites may then offer more productive targeted advertising opportunities to the manufacturer(s).

In contrast to the most popular media creation product(s), the most used product(s) may be the product(s) that experience the most usage per unit of a product. For example, the purchasers of more expensive models of digital camera may tend to use their digital cameras more often than purchasers of less expensive models (or vice versa). Additionally, the purchasers of more expensive models may visit or post digital photographs to web sites that allow users to post or display photos that are larger and/or more detailed (i.e., require more data). By determining the digital camera models that are used to post the most pictures, even if those models are not the most popular by the number of purchasers, the digital media crawler 102 may determine the models used by purchasers who take and post the most digital images. Targeted advertising may then be sold to manufacturers who sell, for example, more expensive models on the web sites most visited by consumers who use their cameras most often.

Data such as the above reflecting the types of products used to post media files to specific web sites may also offer insight into the demographics of the people posting the noted files. For example, a web site with an unusually large number of media files from an expensive product may be accessed by persons with larger incomes (as demonstrated by their ability to purchase the expensive media creation product). As such, the information collected by the methods, apparatus and articles of manufacture disclosed herein may be used to develop information about the demographics of the persons posting media files to a particular web site or other network location, thereby providing new or enhanced advertising opportunities.

Additionally or alternatively, the digital media crawler 102 may identify the source(s) and/or software encoding used to generate digital audio files used on the web sites 104 and 106, the personal data stores 114 and 116, and/or the online storage 120. Users may download audio files from download sites and/or programs such as iTunes®, Amazon®, Napster®, Audible®, Zune®, or the like. The distributor(s) of such audio files may include metadata such as an audio file identification number to uniquely identify an audio file purchased by a user. Additionally, users may rip, or copy, audio files from a compact disc or other physical media purchased from brickand-mortar and/or online retailers. Software such as iTunes®, Zune®, Windows Media Player, and the like provide ripping capabilities to users. The ripping software may, at the user's request, populate the audio files with metadata used to keep the audio files organized for the user. The metadata may also include information to identify the software used to rip the audio files from the physical media.

Additionally or alternatively, the digital media crawler 102 may identify video editing software used to generate digital video files on the web sites 104 and 106, the personal data stores 114 and 116, and/or the online storage 120.

The example digital media crawler 102 generates a report of the aggregated data. The report may be output to a user of the digital media crawler 102 via a user interface 122 (e.g., a display monitor, a printer) and/or sent to a central data server 124. The central data server 124 collects report(s) from the digital media crawler 102 and may aggregate data from the reports to determine appropriate web sites for targeted advertising.

The digital media crawler 102 and/or the central data server 124 of the illustrated example further communicate with an advertisement generator 126. The advertisement generator 126 of the illustrated example generates advertisements for display on a web site such as the web sites 104 and 106 based on the report(s) from the digital media crawler 102 and/or the central data server 124. For example, when a user navigates to the web site 104, the web site 104 requests an advertisement from the advertisement generator 126. Based on the report generated by the digital media crawler 102, the advertisement generator 126 may generate an advertisement for a particular media creation product based on one or more reports associated with the web site 104.

To generate advertisements, the advertisement generator 126 of the illustrated example maintains an advertisement database 128. The advertisement database 128 is populated with advertisements from media creation product designers and/or manufacturers. When the advertisement generator 126 receives a request to generate an advertisement, the advertisement generator 126 retrieves an advertisement corresponding to a media creation product identified in the advertisement database 128. The advertisement generator 126 sends the advertisement to be displayed with the web site 104 to the requesting user either directly or via the server associated with the web site 104.

As described in more detail below, the example digital media crawler 102 may additionally determine common characteristics of identified media creation products. For example, the digital media crawler 102 may determine characteristics of the media creation products by querying a media creation products database 130. The characteristics are then compared to determine the common characteristics or features of the most popular or most often used models. Such data may be useful to manufacturers for evaluation of consumer preferences and desired features in media creation products.

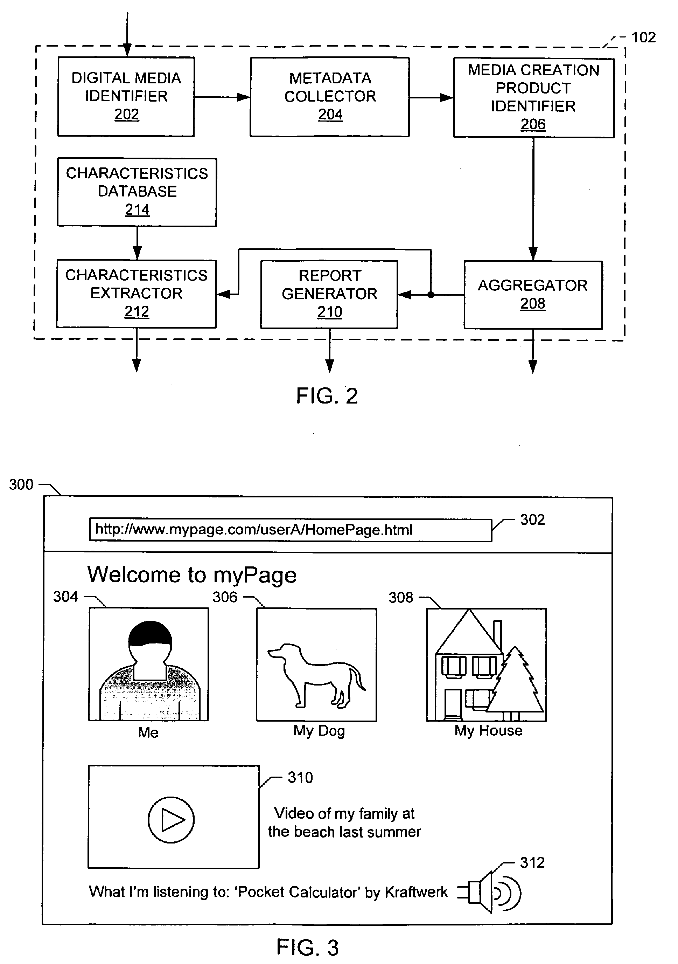

FIG. 2 is a more detailed block diagram of the example digital media crawler of FIG. 1. The example digital media crawler 102 includes a digital media identifier 202, a metadata collector 204, a media creation product identifier 206, an aggregator 208, a report generator 210, and a characteristics extractor 212. The digital media identifier 202 may access a web site (e.g., the web sites 104 and/or 106 of FIG. 1), a personal data store (e.g., the personal data stores 114 and/or 116 of FIG. 1), and/or online storage (e.g., the online storage 120 of FIG. 1) to identify digital media files.

The identified digital media files are passed to the metadata collector 204. The metadata collector 204 collects or extracts metadata from the digital media files identified by the digital media identifier 202. In some examples, the metadata collector 204 collects all of the available metadata from the digital media files. Alternatively, the metadata collector 204 will only collect desired metadata from the digital media files. For example, the metadata collector 204 may collect metadata representative of any or all of camera make information, camera model information, firmware version information, and creation software information. In another example, the metadata collector 204 may collect any or all of an artist name, a song title, an album title, file generation software information, and/or a file identifier from a digital music file.

The metadata collected by the metadata collector 204 is sent to the media creation product identifier 206. The media creation product identifier 206 determines the media creation product(s) used to generate the digital media files identified by the digital media identifier 202 from the metadata collected by the metadata collector 204. For example, the media creation product identifier 206 may determine a digital camera brand and/or model used to generate a digital image file by examining the make and model fields of the metadata. In another example, the media creation product identifier 206 may determine a digital video camera brand and/or model used to generate a digital video file by examining the make and model fields of the metadata. The media creation product identifier 206 may further determine the maker, name, and/or version of video editing software used to edit and arrange the digital video file by examining a creation or editing software field.

The media creation product information identified by the media creation product identifier 206 is sent to the aggregator 208. If multiple digital media files are determined to be generated by the same product type (e.g., the same make and model camera), the media creation product identifier 206 sends the media creation product type to the aggregator 208 multiple times or indicates that a previously-identified product type is associated with additional digital media files. The example aggregator 208 collects the brand, name, and/or model of the media creation product(s) identified by the media creation product identifier 206 and determines a number of the identified digital media files that are generated by each identified product type. Thus, the aggregator 208 monitors and updates the list of identified media creation product and the number of digital media files generated by each identified product.

When the media creation product identifier 206 has finished identifying the media creation product type(s) associated with the metadata collected by the metadata collector 204, the aggregator 208 has a list of identified products and the number of digital media files generated by each identified product. The number of digital media files generated by each identified media creation product may be represented, for example, as an absolute number or using relative usages.

Additionally, the aggregator 208 of the illustrated example may group the media creation product types by general type of digital media file (e.g., image, video, audio), by specific format of digital media file (e.g., bitmap (.bmp), jpg, .gif), and/or may aggregate all digital media files together into one list. By grouping the general type of digital media file, the aggregator 208 may compare usage of media creation product types that generate a particular type of digital media file. For example, the aggregator 208 may group digital image files to determine the most popular and/or most used digital camera(s).

The aggregator 208 of the illustrated example provides the list to a report generator 210, which generates a report of the identified media creation products and outputs the report to a central data server (e.g., the central data server 124 of FIG. 1) and/or to a user interface (e.g., the user interface 120 of FIG. 1). The aggregator 208 may further provide the list of identified media creation products to an advertisement generator (e.g., the advertisement generator 126 of FIG. 1) and/or to the characteristics extractor 212.

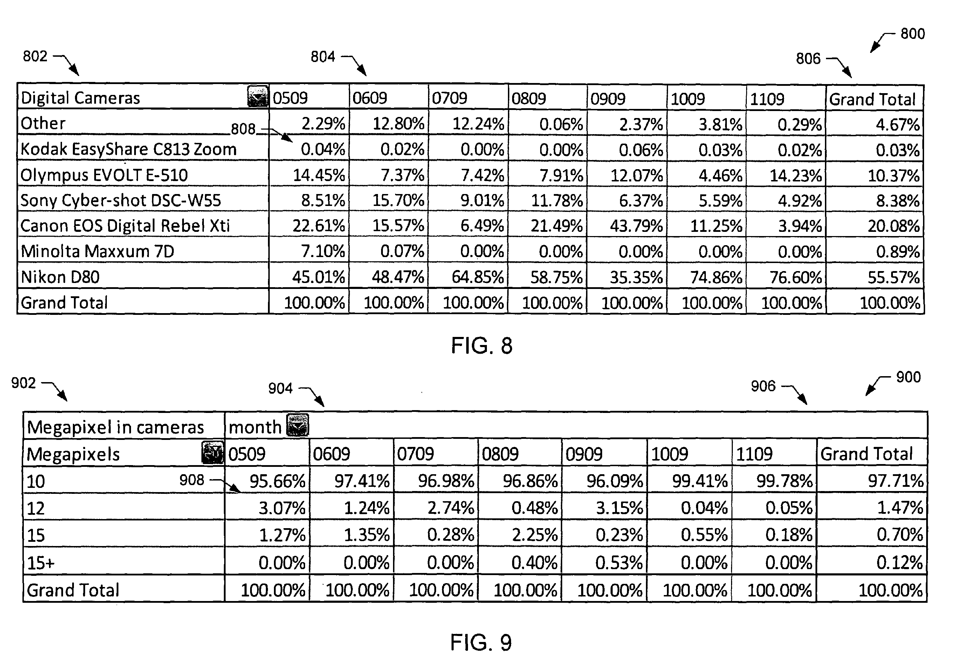

The characteristics extractor 212 receives the list of identified media creation products and extracts characteristics of the identified products to determine characteristics of the most popular and/or most often used products. For example, the characteristics extractor 212 determines the megapixels, resolution, optical zoom, size, weight, and/or other characteristics of each of several identified digital cameras in an example list. To determine the characteristics, the characteristics extractor 212 may query an internal characteristics database 214 and/or an external database (e.g., the media creation products database 130 of FIG. 1). The characteristics extractor 212 compares the characteristics of the identified media creation products to determine common product characteristics or features of the most popular and/or the most often used products. These common product characteristics may be provided to manufacturers in a report such as the report 900 illustrated in FIG. 9.

FIG. 3 is an illustration of an example web site 300 that may be crawled to retrieve metadata from digital media files. The example web site 300 may represent any publicly accessible web site, such as the web sites 104 and 106 described in connection with FIG. 1. Web sites such as MySpace®, YouTube®, Facebook®, and Flickr® often host digital media files such as digital images, digital audio, and/or digital video that are publicly accessible or accessible to a selected group of users. Any or all of the digital media files may include publicly available metadata that may be used to determine the media creation products (e.g., equipment, device(s), and/or software) used to generate the respective digital media file(s).

The example web site 300 may be found at an example address (e.g., a uniform resource locator (URL)) 302
<http://www.mypage.com/userAmomePage.html>, and includes digital images 304, 306, and 308, a digital video 310, and a streaming digital music file 312 (collectively, digital media files 304-312). With reference to FIG. 1, the example digital media crawler 102 loads the web site 300 from the World Wide Web 108 and identifies the digital media files 304-312.

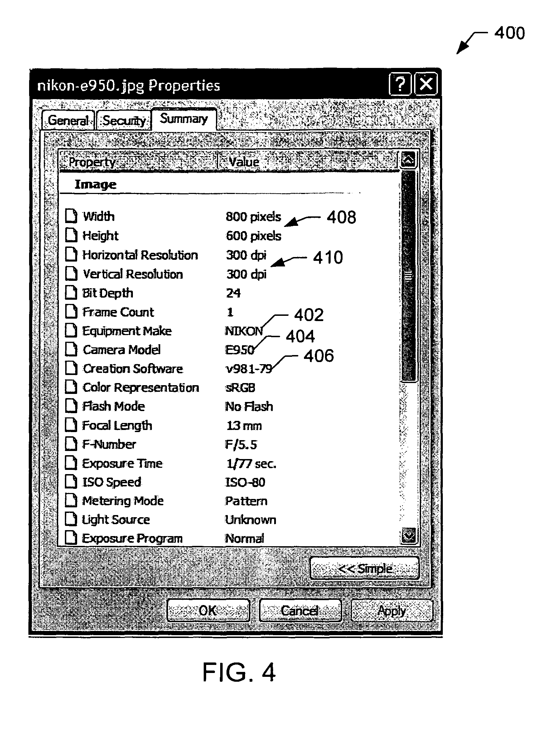

The digital media identifier 202 then passes the digital media files 304-312 to the metadata collector 204. The digital media files 304-312 may be sent to the metadata collector 204 one at a time or as a group. The metadata collector 204 collects metadata from the digital media files 304-312. FIG. 4 is an illustration of example metadata 400 retrieved from a digital image file (e.g., the digital image file 304). The metadata collector 204 collects the metadata 400 from, for example, the digital image file 304. The collected metadata includes, for example, the make 402 (e.g., NIKON), the model 404 (e.g., E950), the name and/or version of the creation software 406 (e.g., v981-79), size 408 (e.g., 800x600 pixels), resolution 410 (e.g., 300 dots per inch (dpi)), and/or any other identifying information. The make 402, model 404, and/or creation software 406 data may be used to identify the type of media creation product used to generate the corresponding digital image file.

From the digital video file 310, the example metadata collector 204 may collect metadata such as the name of the encoding software used to generate the digital video file 310.

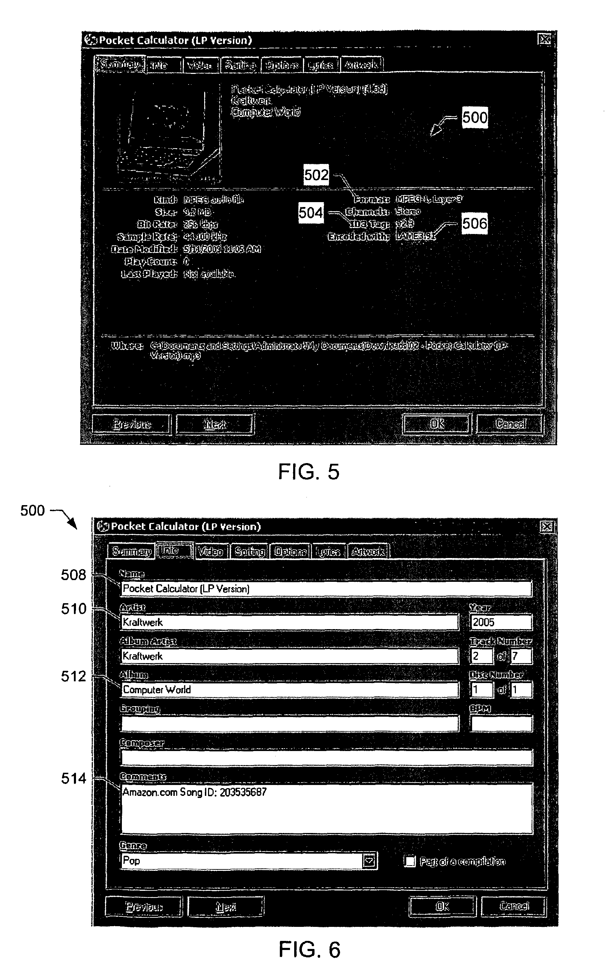

FIGS. 5 and 6 illustrate example metadata 500 retrieved from a digital audio file (e.g., the audio file 312 of FIG. 2). With reference to FIG. 5, the metadata collector 204 collects metadata from the digital audio file 312 that may include, for example, a file format 502 (e.g., MP3), an ID3 tag version 504 (e.g., v2.3), and/or an encoding type 506 (e.g., LAME3.91). With further reference to FIG. 6, the metadata collector 204 may additionally or alternatively collect a track title or song name 508 (e.g., Pocket Calculator (LP Version)), an artist or performer name 510 (e.g., Kraftwerk), an album or compilation title 512 (e.g., Computer World), and/or a file identifier 514 (e.g., Amazon Song ID 203535687). Some music or content distributors may identify each track by a unique identifier. The identifier may be used to identify the distributor or origin of the example digital audio file 312.

While an example manner of implementing the digital media crawler 102 of FIG. 1 has been illustrated in FIG. 2, one or more of the elements, processes and/or devices illustrated in FIG. 2 may be combined, divided, re-arranged, omitted, eliminated and/or implemented in any other way. Further, the example digital media identifier 202, the example metadata collector 204, the example media creation product identifier 206, the example aggregator 208, the example report generator 210 and/or, more generally, the example digital media crawler 102 of FIG. 2 may be implemented by hardware, software, firmware and/or any combination of hardware, software and/or firmware. Thus, for example, any of the example digital media identifier 202, the example metadata collector 204, the example media creation product identifier 206, the example aggregator 208, the example report generator 210 and/or, more generally, the example digital media crawler 102 could be implemented by one or more circuit(s), programmable processor(s), application specific integrated circuit(s) (ASIC(s)), programmable logic device(s) (PLD(s)) and/or field programmable logic device(s) (FPLD(s)), etc. When any of the appended claims are read to cover a purely software and/or firmware implementation, at least one of the example digital media crawler 102, the example digital media identifier 202, the example metadata collector 204, the example media creation product identifier 206, the example aggregator 208, and/or the example report generator 210 are hereby expressly defined to include a tangible medium such as a memory, DVD, CD, etc. storing the software and/or firmware. Further still, the example digital media crawler 102 of FIG. 2 may include one or more elements, processes and/or devices in addition to, or instead of, those illustrated in FIG. 2, and/or may include more than one of any or all of the illustrated elements, processes and devices.

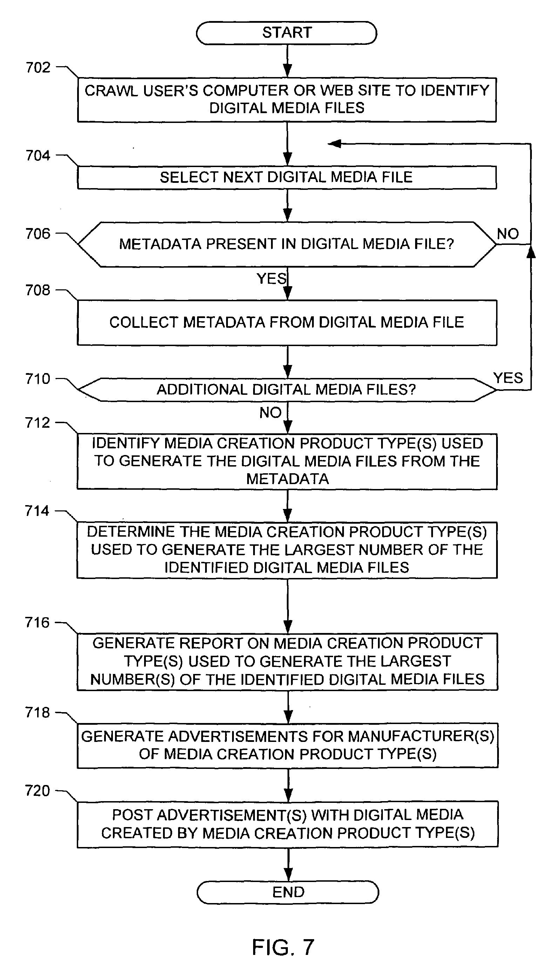

FIG. 7 is a flowchart representative of example machine readable instructions 700 to determine media creation product usage based on publicly available metadata in digital media files. The example machine readable instructions 700 may be executed to implement the example digital media crawler 102 described in connection with FIGS. 1 and 2.

The example machine readable instructions 700 may begin by crawling (e.g., via a digital media identifier 202) a user's computer (e.g., the computers 112 and 114 of FIG. 1), a data store (e.g., the personal data stores 116 and 118 of FIG. 1, the online storage 120 of FIG. 1), a web site (e.g., the web sites 104 and 106), and/or any other network location to identify one or more digital media files (block 702). The example metadata collector 204 of FIG. 2 then selects one of the identified digital media files (block 704). The metadata collector 204 determines whether the selected digital media file includes metadata (block 706). If the digital media file does not have any metadata (block 706), control returns to block 704 to select the next identified digital media file.

If the selected digital media file includes metadata (block 706), the metadata collector 204 collects the metadata from the selected digital media file (block 708). The metadata collector 204 then determines whether there are additional digital media files identified by the digital media identifier 202 (block 710). If there are additional digital media files (block 710), control returns to block 704 to select the next digital media file. If there are no additional digital media files (block 710), the media creation product identifier 206 identifies the media creation product type(s) used to generate the digital media files based on the metadata collected by the metadata collector 204 (block 712).

The aggregator 208 then determines the media creation product type(s) used to generate the largest riumber(s) of the identified digital media files (block 714). In general, the aggregator 208 compares similar media creation product types in a single class of product type (e.g., digital camera, encoding software, digital video camera), such as by comparing digital camera models, and not comparing digital camera models to mp3 encoding software. For example, the aggregator 208 may determine one or more digital camera models used to generate the largest number of digital images. However, the aggregator 208 may compare different classes of media creation product types as well (e.g., digital video cameras to digital image cameras). Additionally or alternatively, the aggregator 208 may determine the media creation product type(s) used by the largest number(s) of users. The report generator 210 then generates a report on the media creation product type(s) used to generate the largest number(s) of the identified digital media files (block 716). The advertisement generator 126 then generates advertisements for the manufacturer(s) of the media creation product type(s) based on the report (block 718). In some examples, the advertisement generator 126 generates the advertisements in response to requests to load web sites. The advertisement generator 126 may then post or display the generated advertisements with, for example, the digital media files created or generated using the corresponding media creation product type(s) (block 720). The example machine readable instructions 700 allows targeted advertising of media creation products on web sites where users of content tend to access (e.g., users of the devices, equipment, and/or software are detected based on the collected metadata).

FIG. 8 is a table illustrating an example report 800 generated by the digital media crawler 102 of FIG. 2. The example report 800 is representative of digital camera usage for several of the most popular digital cameras determined by collecting and examining metadata from publicly available digital media. The report 800 includes a list of the most popular cameras 802. The list of cameras 802 includes an "Other" category that includes digital cameras not otherwise specified in the list 802.

The example report 800 may be broken down into multiple time periods 804. The example time periods 804 are broken down into months. In some examples, the digital media crawler 102 collects metadata including the date that the digital media was generated and aggregates the metadata based on the date. The report 800 may further aggregate the metadata into a grand total column that includes all dates.

In the example report 800, the digital camera usage is expressed as relative usage 808 on a per-month basis and on a grand total basis. Because each time period 804 may have a different number of digital photographs submitted by users, the relative usage 808 may be weighted differently between time periods 804 when factored into the grand total 806.

FIG. 9 is a table illustrating another example report 900 generated by the digital media crawler 102 of FIG. 2. The example report 900 is representative of a characteristic of a digital camera (e.g., the number of megapixels) in publicly available digital image files determined by collecting and examining metadata from the digital image files. The example report 900 may be generated by, for example, the characteristics extractor 212 described above in connection with FIG. 2. The report 900 divides the numbers of megapixels 902 into approximations using several common megapixel counts. For example, 10 megapixels, 12 megapixels, and 15 megapixels are common megapixel counts for many commercially available digital cameras. The megapixel counts may be given or sold to manufacturers to provide information about consumer preferences on megapixel counts in digital cameras and to guide future product development.

Like the report 800 described in connection with FIG. 8, the example report 900 may be divided into several time periods 904. The example report 800 may be broken down into multiple time periods 804. The digital media crawler 102 collects metadata including the date that the digital media was generated and aggregates the metadata based on the date. The report 900 may further aggregate the metadata into a grand total column 906 that includes all dates.

In the example report 900, the number of megapixels is expressed as relative usage 908 on a per-month basis and on a grand total basis. Because each time period 904 may have a different number of digital photographs submitted by users, the relative usage 908 may be weighted differently between time periods 904 when factored into the grand total 906.

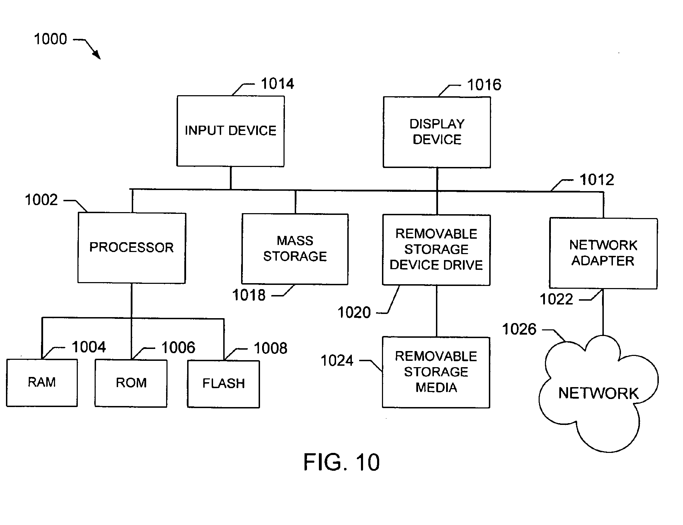

FIG. 10 is a diagram of an example processor system 1000 that may be used to execute the example machine readable instructions 700 described in FIG. 7, as well as to implement the digital media crawler 102 described in FIGS. 1 and 2. The example processor system 1000 includes a processor 1002 having associated memories, such as a random access memory (RAM) 1004, a read only memory (ROM) 1006 and a flash memory 1008. The processor 1002 is coupled to an interface, such as a bus 1012 to which other components may be interfaced. In the illustrated example, the components interfaced to the bus 1012 include an input device 1014, a display device 1016, a mass storage device 1018, a removable storage device drive 1020, and a network adapter 1022. The removable storage device drive 1020 may include associated removable storage media 1024 such as magnetic or optical media. The network adapter 1022 may connect the processor system 1000 to an external network 1026.

The example processor system 1000 may be, for example, a conventional desktop personal computer, a notebook computer, a workstation or any other computing device. The processor 1002 may be any type of processing unit, such as a microprocessor from the Intel^{®} Pentium^{®} family of microprocessors, the Intel^{®} Itanium^{®} family of microprocessors, and/or the Intel XScale^{®} family of processors. The memories 1004, 1006 and 1008 that are coupled to the processor 1002 may be any suitable memory devices and may be sized to fit the storage demands of the system 1000. In particular, the flash memory 1008 may be a non-volatile memory that is accessed and erased on a block-by-block basis.

The input device 1014 may be implemented using a keyboard, a mouse, a touch screen, a track pad, a barcode scanner or any other device that enables a user to provide information to the processor 1002.

The display device 1016 may be, for example, a liquid crystal display (LCD) monitor, a cathode ray tube (CRT) monitor or any other suitable device that acts as an interface between the processor 1002 and a user. The display device 1016 as pictured in FIG. 8 includes any additional hardware required to interface a display screen to the processor 1002.

The mass storage device 1018 may be, for example, a conventional hard drive or any other magnetic, optical, or solid state media that is readable by the processor 1002.

The removable storage device drive 1020 may, for example, be an optical drive, such as a compact disk-recordable (CD-R) drive, a compact disk-rewritable (CD-RW) drive, a digital versatile disk (DVD) drive or any other optical drive. It may alternatively be, for example, a magnetic media drive and/or a solid state universal serial bus (USB) storage drive. The removable storage media 1024 is complimentary to the removable storage device drive 1020, inasmuch as the media 1024 is selected to operate with the drive 1020. For example, if the removable storage device drive 1020 is an optical drive, the removable storage media 1024 may be a CD-R disk, a CD-RW disk, a DVD disk or any other suitable optical disk. On the other hand, if the removable storage device drive 1020 is a magnetic media device, the removable storage media 1024 may be, for example, a diskette or any other suitable magnetic storage media.

The network adapter 1022 may be, for example, an Ethernet adapter, a wireless local area network (LAN) adapter, a telephony modem, or any other device that allows the processor system 1000 to communicate with other processor systems over a network. The external network 1026 may be a LAN, a wide area network (WAN), a wireless network, or any type of network capable of communicating with the processor system 1000. Example networks may include the Internet, an intranet, and/or an ad hoc network.

Although this patent discloses example systems including software or firmware executed on hardware, it should be noted that such systems are merely illustrative and should not be considered as limiting. For example, it is contemplated that any or all of these hardware and software components could be embodied exclusively in hardware, exclusively in software, exclusively in firmware or in some combination of hardware, firmware and/or software. Accordingly, while the above specification described example systems, methods and articles of manufacture, the examples are not the only way to implement such systems, methods and articles of manufacture. Therefore, although certain example methods, apparatus and articles of manufacture have been described herein, the scope of coverage of this patent is not limited thereto. On the contrary, this patent covers all methods, apparatus and articles of manufacture fairly falling within the scope of the appended claims either literally or under the doctrine of equivalents.

## Claims

1. A method comprising:
collecting metadata from a plurality of digital media files;
identifying product types used to generate the digital media files based on the metadata;
determining which of the identified product types is used to generate a largest number of the digital media files; and
generating a report identifying the product types used to generate the largest number of the digital media files.

2. A method as defined in claim 1, wherein the product types comprise at least one of a digital camera model, a digital video camera model, a digital audio recorder, a digital video editor, a digital image editor, a digital audio editor, or a Moving Picture Experts Group-1 Audio Layer 3 converter.

3. A method as defined in claim 1, wherein collecting metadata from the digital media files comprises crawling a first web site to identify the plurality of digital media files.

4. A method as defined in claim 3, wherein generating the report comprises collecting metadata from the first web site and determining the product types used to generate the largest number of digital media files for a plurality of web sites including at least the first web site.

5. A method as defined in claim 1, wherein the report further comprises relative usages of the product types.

6. A method as defined in claim 1, further comprising determining a common characteristic among a plurality of the identified product types.

7. An apparatus comprising:
a metadata collector to collect metadata from a plurality of digital media files;
a product identifier to identify product types used to generate the digital media files based on the metadata;
an aggregator to determine a first product type used to generate a largest number of the digital media files; and
a report generator to generate a report identifying the first product type.

8. An apparatus as defined in claim 7, further comprising an advertisement generator to generate an advertisement for a product corresponding to the first product type.

9. An apparatus as defined in claim 7, wherein the aggregator aggregates a usage of the identified product types to determine which of the product types is purchased by the largest number of users.

10. An apparatus as defined in claim 7, further comprising a digital media identifier to crawl a web site to identify the plurality of digital media files.

11. An apparatus as defined in claim 7, further comprising a digital media identifier to crawl a storage device to identify a plurality of digital media files.

12. An apparatus as defined in claim 7, wherein the report further comprises relative usages of the product types.

13. An apparatus as defined in claim 7, further comprising a characteristics extractor to determine a common characteristic among a plurality of the identified product types.

14. An apparatus as defined in claim 13, wherein determining a common characteristic of the plurality of identified product types comprises querying a database to determine one or more characteristics of the identified product types and comparing the characteristics to determine one or more common characteristics.

15. An article of manufacture comprising machine readable instructions which, when executed by a computer, cause the computer to:
collect metadata from a plurality of digital media files;
identify product types used to generate the digital media files based on the metadata;
determine which of the identified product types is used to generate a largest number of the digital media files; and
generate a report identifying the product type used to generate the largest number of the digital media files.
